# EUROPEAN PATENT SPECIFICATION

(11) **EP 2 556 318 B1**
(45) Date of publication and mention of the grant of the patent: **19.03.2014**
(21) Application number: 11706923.7
(22) Date of filing: 24.02.2011
(51) Int. Cl.: F27D 99/00, C21C 5/52, F23D 1/00, F27B 3/20, F27D 3/18, F27B 3/22

(54) **FLASH FURNACE VELOCITY CONTROL**
GESCHWINDIGKEITSREGELUNG BEI EINEM SCHWEBESCHMELZOFEN
COMMANDE DE VITESSE DE FOUR DE TYPE FLASH

(30) Priority: 07.04.2010 GB 201005765
(43) Date of publication of application: 13.02.2013
(73) Proprietor: Clyde Process Limited, Aberdeen, AB15 4YL (GB)
(72) Inventor: SNOWDON, Brian, Doncaster, South Yorks DN11 9UJ (GB)
(74) Representative: Flaherty, Annette Esther
(86) International application number: PCT/GB2011/050364
(87) International publication number: WO 2011/124902

(56) References cited:
- WO-A2-2009/134542
- AT-A4- 505 750
- US-A- 4 457 241
- US-A- 4 688 496

## Description

The present invention relates to methods and apparatus for modifying the velocity of a particulate bulk material during transfer by pneumatic conveying apparatus to a location where the material is to be used, processed or stored.

Pneumatic conveying provides an effective and convenient means to feed a particulate bulk material from one location to another where it may be processed. The manner in which the material is conveyed is important for the efficiency of the process. Pneumatic conveying provides many advantages over mechanical conveying in this respect. For example, it is desirable for the material to be delivered in a smooth, continuous flow since a pulsed or uneven flow can cause problems and render the process inefficient. Such a smooth flow is difficult to achieve with mechanical conveying means.

In some industries, such as power generation, it is common to use relatively high conveying velocities, such as around 20 to 30 m/s. In these industries, a relatively high conveying velocity can be used since the conveyed material, such as pulverized coal, is generally non-abrasive. Also, the burner used is adapted to handle material being conveyed at this velocity.

An example of a particle-fed burner is given in US 4 688 496.

However, in flash furnace applications, the particulate bulk material to be conveyed is usually abrasive and wear of equipment occurs, resulting from attrition by the particulate material, when the material is transported at a high velocity. An example of this type of process is the feeding of metallic concentrate into a flash furnace, such as the smelting of metals such as copper. This process uses a burner in which the material falls down a burner pipe under gravity before being evenly dispersed within the furnace. Therefore, this type of burner requires the conveyed material to be at a significantly lower velocity within the burner pipe. However, a low conveying velocity can result in the material falling out of suspension to form plugs with the result that the material pulses from the end of the conveying pipe. If this is connected to the burner, the burner will also pulse which is unacceptable.

Furthermore, the conveyed material is typically stored at ground level but the burner is situated above ground level, typically at a height of 20 m or more. Mechanical conveying can raise the particulate material to the required height, but is incapable of providing the necessary smooth continuous flow. Pneumatic conveying is advantageous in providing a smooth continuous flow of the particulate material to the burner, but raising the particulate material to the height of the burner necessitates a high conveying velocity which would result in the problems identified above.

It is desirable to provide means for conveying material to a flash furnace which provides a smooth continuous flow. It is desirable to provide means for conveying material to a flash furnace which involves a relatively low conveying velocity at the burner.

In accordance with the present invention there is provided conveying apparatus adapted to convey a particulate material from a source to a burner provided at a flash furnace, the apparatus comprising:
pneumatic conveying means adapted to convey the particulate material at a relatively high velocity; and
a flow modifying device provided at or near the burner inlet, wherein the flow modifying device is adapted to receive and arrest the flow of the conveyed particulate material such that the particulate material flows to the burner inlet at a reduced velocity and wherein the flow modifying device includes a first recess opposed to the direction of flow of the particulate material at the burner inlet such that particulate material gathers within the first recess to oppose the subsequent flow of particulate material.

The flow modifying device may have an inlet and an outlet and the particulate material is conveyed in a first direction to the inlet of the flow modifying device and the particulate material flows from the outlet to the burner inlet in a second different direction. The second direction may be substantially perpendicular to the first direction.

The particulate material may be conveyed from the source to the burner via a conduit and the inlet has a cross-sectional area larger than that of the conduit. The outlet may have a cross-sectional area larger than that of the inlet.

The outlet may be inclined such that particulate material flowing from the outlet to the burner inlet is gravity assisted.

The apparatus may include a second recess provided downstream of the first recess and upstream of the burner inlet. The second recess may be opposed to the direction of flow of the particulate material from the first recess.

The source may be located at a first height and the burner inlet located at a second greater height.

The apparatus may include at least one vent for venting the conveying gas. A vent may be provided at the flow modifying device. A vent may be provided at the outlet of the flow modifying device. A vent may be provided at or near the burner inlet.

The flow modifying device may comprise a cyclone separator. The apparatus may include straightening vanes are located downstream of the cyclone separator.

Embodiments of the present invention will now be described, by way of example only, with reference to the accompanying drawings, in which:
Figure 1a shows a conveying apparatus for conveying metal concentrate to a flash furnace burner, the apparatus including a flow modifying device according to a first embodiment;
Figure 1b is a section along line A-A of Figure 1a;
Figure 1c is a section along line B-B of Figure 1a;
Figure 2 shows a second embodiment of a flow modifying device provided at the burner inlet;
Figure 4 shows a fourth embodiment of a flow modifying device provided at the burner inlet;
Figure 5a shows a fifth embodiment of a flow modifying device provided at the burner inlet;
Figure 5b is a section along line A-A of Figure 5a; and
Figure 5c is a section along line B-B of Figure 5a.

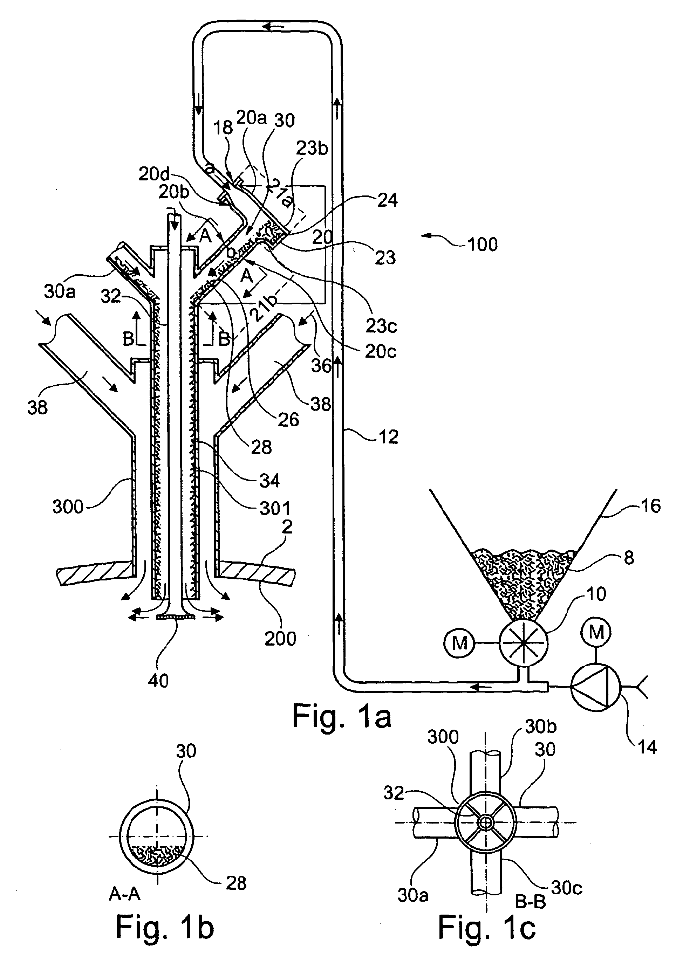

Figure 1a shows conveying apparatus 100 for pneumatically conveying a particulate bulk material 8, particularly a metal concentrate and more specifically a copper concentrate, to the burner inlet 300 of a flash furnace 200. The apparatus 100 comprises a source in the form of a storage bin 16 for the particulate material 8, a pneumatic conveying line 12, a compressor 14 supplying pneumatic conveying gas to the conveying line 12, a valve 10 for feeding material 8 from the bin 16 into the conveying line 12 and a flow modifying device 20 provided at the burner inlet 300.

The flow modifying device 20 has an inlet 18 in communication with conveying line 12 and an outlet 30 which communicates with the burner inlet 300. The burner inlet 300 is mounted on a top portion 2 of the flash furnace 200. The burner inlet 300 and flow modifying device 20 are therefore a substantial height above the storage bin 16.

Particulate material 8 is transported from the storage bin 16 to the burner inlet 300 via the pneumatic conveying line 12. The material 8 is suspended in a conveying gas provided by the conveying gas blower or compressor 14 and is supplied to the conveying line 12 using a rotary feeding device 10. Feeding systems of this (and other) type(s) tend to cause pulsations in the conveying material and the extent of such pulsation is strongly dependent on the velocity at which the material is conveyed. If the conveying velocity is too low in any part of the conveying line 12, the particulate material 8 will fall out of suspension causing plugs of material to form. If the velocity is too high however, although this will reduce or eliminate pulsations, excessive wear on the conveying pipes will be caused.

The present invention provides a flow modifying device provided at the burner inlet 300 which is adapted to receive and arrest the flow of the conveyed particulate material 8. This allows the particulate material 8 to be conveyed along the conveying line 12 at a relatively high velocity. Particulate material 8 flows from the outlet 30 of the flow modifying device 20 to the burner inlet 300 at a velocity which is reduced and so suits the operation of the burner and the flash furnace process.

Before reaching the burner inlet 300, the particulate material 8 in the conveying gas enters the flow modifying device 20, through inlet 18. The inlet 18 has a larger cross-sectional area than that of the conveying line 12 and so there is some reduction in velocity as particulate material 8 enters the flow modifying device 20.

In the embodiment illustrated in Figure 1a, the flow modifying device 20 comprises a "blind tee" in which one branch of the tee piece is blanked off. The branch that is blanked off is arranged to be the one that opposes a first direction of flow of the particulate material which is the flow to the inlet 18 of the flow modifying device 20. This first direction is indicated by arrow "a" in Figure 1a. Particulate material 8 exits the outlet of the flow modifying device 20 travelling in a second different direction which is indicated by arrow "b".

The blind tee includes a head portion 21a which communicates with inlet 18 and a leg portion 21b which communicates with outlet 30. Portions 21a and 21b are in communication with each other so that particulate material can pass from head portion 21a into body portion 21b. Head portion 21a is defined by upper wall portion 20a and lower wall portion 20d. Where, as is usual, the head portion 21a is substantially cylindrical in shape, wall portions 20a and 20d are part of the same cylindrical wall. Body portion 21b is defined by wall portions 20b and 20c which are also part of the same wall where, as is usual, the body portion 21b is substantially cylindrical.

In the example illustrated in Figure 1a, the head portion 21a and body portion 21b are arranged substantially perpendicular to one another. Therefore, the first and second directions are also substantially perpendicular. However, this need not be the case and other embodiments may involve different angles.

The blind tee includes a recess 24 formed in head portion 21a provided by the blanked off branch. The recess 24 is located opposite inlet 18 with respect to the flow direction a. Recess 24 is defined by end wall 23 of the head portion 21a and side walls 23b and 23c. Side wall 23b is conveniently a part of wall portion 20a and side wall 23c is conveniently a part of wall portion 20d.

The particulate material 8 initially collides with end wall 23 of the blind tee 22 and then particulate material 8 gathers in the recess 24. The accumulated particulate material 8 in the recess 24 provides a buffer having a cushioning effect for the particles impacting in the region defined by recess 24. The resulting reduction in velocity of the particulate material 8 causes separation of the particulate material 8 from the conveying gas. Particulate material 8 is discharged generally in the second direction b through the outlet 30.

Outlet 30 has a larger cross-sectional than that of the inlet 18. Because of this, any acceleration of the particulate material 8 while flowing in the second direction is minimized or eliminated. Also, the flow modifying device 20 is located at the burner inlet so that the length of the leg portion 21b of the flow modifying device 20 is relatively short. Therefore, the particulate material 8 does not have the distance required to reaccelerate up to the initial conveying velocity.

The relative cross-sectional areas of the conduit 12, inlet 18 and outlet 30, the collision of particulate material 8 with the end wall 23 and subsequent change in flow direction, the position of the flow modifying device 20 and the relatively short leg portion 21b all contribute to reducing the velocity of the particulate material 8 that flows from the outlet 30 to the burner inlet 300. Typically, the velocity of the particulate material 8 is reduced to around 50% of the initial conveying velocity. Any reduction in velocity has a considerable effect on reducing wear in the system. Generally, wear is proportional to velocity to the power of 2.5.

The body portion 21b of the flow modifying device 20 is inclined so that, following separation of the particulate material 8 from the conveying gas, the particulate material 8 falls under gravity in a smooth continuous flow along the inner surface 26 of wall portion 20c. This smooth continuous flow of particulate material 8 forms a flowing body 28 occupying a lower half of the outlet 30 in Figure 1b. Thus the flow of particulate material 8 at the burner inlet 300 is substantially due to gravity, which suits the flash furnace process and suits the type of burners used in such processes.

The pneumatic conveying apparatus 100 which delivers the particulate material 8 into the burner inlet 300 is illustrated as a single system in Figure 1a but typically more than one apparatus 100 will be used. Figure 1c, showing a longitudinal plan view of section B-B, illustrates how four pneumatic conveying apparatus can be circumferentially evenly spaced about the centre line of burner inlet 300 and each communicating with the burner inlet 300 via a respective outlet 30, 30a, 30b and 30c. As material leaves each flow modifying device 30, 30a, 30b, 30c along a respective inner surface 26, it is discharged into burner inlet 300 and progresses downwardly along the burner inlet pipe 301 and exits into the furnace 200. The smooth continuous flow from each respective flow modifying device 30, 30a, 30b, 30c allows a circular sleeve of material 34 to fall along the burner outlet pipe 301.

The arrangement in Figure 1a is also provided with an air feed pipe 32 which extends centrally through burner inlet 300 and a dispersal element 40, below the free lower end of burner inlet pipe 301. Dispersal element 40 is provided with air jets arranged to disperse the bulk material evenly into the combustion air 36 supplied through air inlets 38. The formation of the sleeve of material 34, which flows in a smooth continuous manner, ensures that when material exits into the furnace at the end of burner inlet pipe 301, a smooth, even and continuous distribution of particulate material is achieved. If the velocity had not been sufficiently reduced then there would be no smooth continuous flow and the sleeve of material 34 would not form, adversely affecting the distribution of material into the furnace.

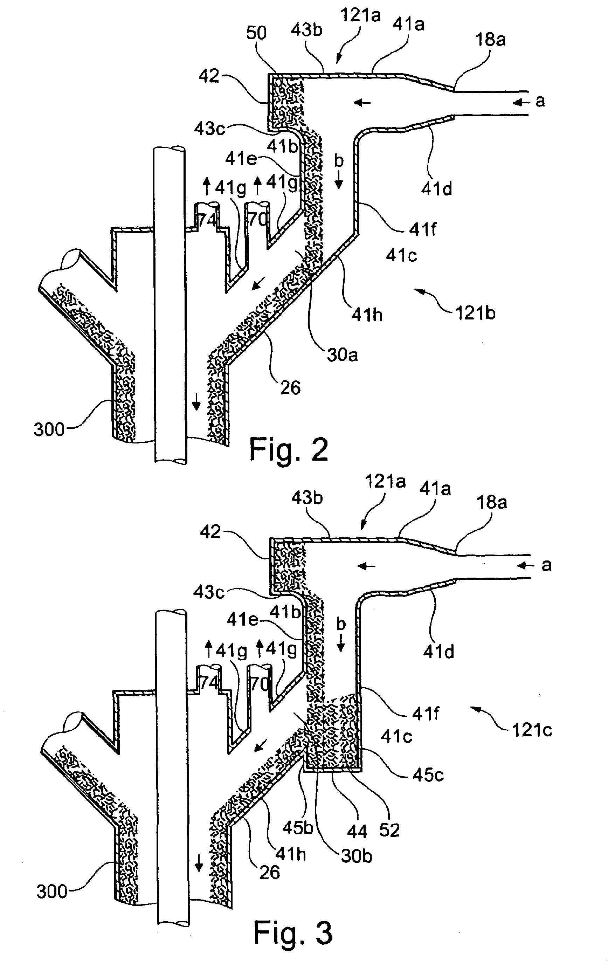

Different embodiments of the flow modifying device are shown in Figures 2, 3, 4 and 5.

Referring to Figure 2, the flow modifying device 20 comprises a head portion 121a with a recess 50 and a body portion 121b. Head portion 121a is defined by upper wall portion 41a and lower wall portion 41d. Recess 50 is defined by end wall 42 and side walls 43b and 43c. Body portion 121b comprises wall portions 41b and 41c. In this alternative embodiment, body portion 121b comprises a substantially vertical section defined by side walls 41e and 41f and an inclined section defined by the side walls 41h and 41g. Side walls 41f and 41h conveniently form part of wall portion 41c and side walls 41e and 41h conveniently form part of wall portion 41b.

In this particular embodiment, the particulate material 8 collides with end wall 42 and gathers in recess 50. Subsequent particulate material 8 is first discharged to the substantially vertical section of the body portion 121b. The material then falls under gravity in a smooth continuous flow and is discharged through outlet 30a via the inclined section along the inner surface 26 of side wall 41h.

A further alternative embodiment is shown in Figure 3. The flow modifying device 20 comprises a head portion 121a (as in Figure 2) and a body portion 121c with an additional recess 52. The recess 52 is defined by end wall 44, and side walls 45c and 45b which are conveniently part of wall portion 41c. In this embodiment, material is discharged to the substantially vertical section of body portion 121c, defined by side walls 41e and 41f, before accumulating in the second recess 52. Material then falls under gravity in a smooth continuous flow and is discharged through outlet 30b via the inclined section along the inner surface 26 of side wall 41h.

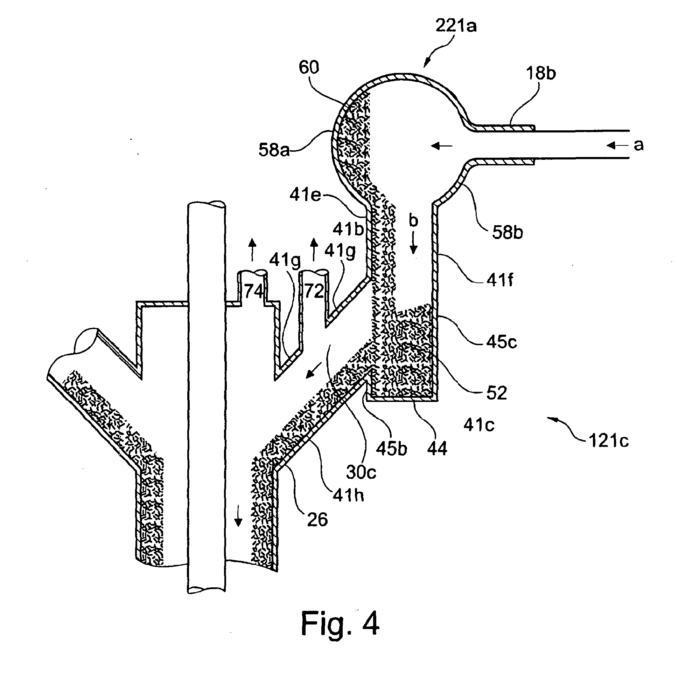

Figure 4 of the accompanying drawings describes another alternative embodiment of the apparatus. The flow modifying device 20 comprises a head portion 221a, with a recess 60, and a body portion 121c. In this particular embodiment the head portion 221a is substantially spherical and defined by wall portions 58a and 58b. The body of material builds up in the substantially curved surface of wall portion 58a which defines the recess 60 and is opposed to the direction of material flowing through the inlet 18b.

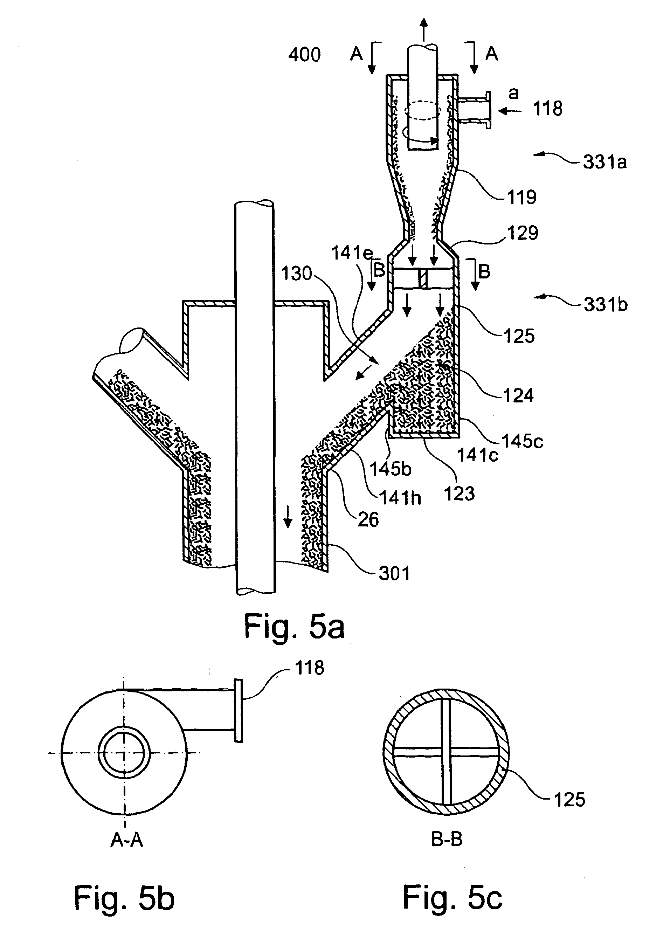

Figure 5a of the accompanying drawings illustrates an alternative embodiment of the apparatus. The flow modifying device 20 comprises an upper portion 331a and a lower portion 331b. The upper portion 331a includes a cyclone separator 400 and the lower portion contains a recess 124. The particulate material 8 is fed from the generally tangential inlet 118 into cyclone separator 400 in such a way so as to cause the material to rotate at sufficient speed to ensure the rotating mass of material is forced against the walls 119 of the device and separated from the conveying gas. Material then descends along walls 119, passing through constriction 129 and straightening vanes 125 into the lower portion 331b of the flow modifying device. Straightening vanes stop the rotation of material and the material accumulates in the recess 124. Recess 124 is opposed to cyclone separator 100 so that the recess becomes filled with material descending from the cyclone. End wall 123 and side walls 145b and 145c define the recess 124. Side walls 145b and 145c are conveniently part of wall portion 141c for the lower portion 331b of the flow modifying device. The accumulated particulate in the recess 124 provides a buffer having a cushioning effect for the particles impacting in the region defined by recess 124. The lower portion 331b further comprises an inclined section defined by side walls 141e and 141h. Following the accumulation of particulate material in recess 124, the material is discharged through outlet 130 via the inclined section along the inner surface 26 of side wall 41h.

The apparatus can include means for venting conveying gas 70. The embodiments of Figures 2, 3 and 4 include this venting means at the flow modifying device 20 and/or at the burner inlet 300.

## Claims

1. Conveying apparatus (100) adapted to convey a particulate material (8) from a source (16) to a burner (300) provided at a flash furnace (200), the apparatus comprising:
pneumatic conveying means adapted to convey the particulate material at a relatively high velocity; and
a flow modifying device (20) provided at or near the burner inlet (300), wherein the flow modifying device (20) is adapted to receive and arrest the flow of the conveyed particulate material (8) such that the particulate material (8) flows to the burner inlet (300) at a reduced velocity and wherein the flow modifying device (20) includes a first recess (24) opposed to the direction of flow of the particulate material at the burner inlet such that particulate material (8) gathers within the first recess (24) to oppose the subsequent flow of particulate material (8).

2. Apparatus according to claim 1, wherein the flow modifying device (20) has an inlet (18) and an outlet (30), and wherein the particulate material (8) is conveyed in a first direction (a) to the inlet (18) of the flow modifying device (20) and wherein the particulate material (8) flows from the outlet (30) to the burner inlet (300) in a second different direction (b).

3. Apparatus according to claim 1 or 2, wherein the particulate material (8) is conveyed from the source (16) to the burner (300) via a conduit (12), and wherein the inlet (18)) has a cross-sectional area larger than that of the conduit (12).

4. Apparatus according to any preceding claim, wherein the outlet (30) has a cross-sectional area larger than that of the inlet (18).

5. Apparatus according to any of claims 2 to 4 when dependent on claim 2, wherein the second direction (b) is substantially perpendicular to the first direction (a).

6. Apparatus accordingly to any of claims 2 to 5 when dependent on claim 2, wherein the outlet (30) is inclined such that particulate material (8) flowing from the outlet (30) to the burner inlet (300) is gravity assisted.

7. Apparatus according to any of claims 5 or 6, including a second recess (50) provided downstream of the first recess (24) and upstream of the burner inlet (300).

8. Apparatus according to claim 7, wherein the second recess (50) is opposed to the direction of flow of the particulate material (8) from the first recess (24).

9. Apparatus according to any preceding claim, wherein the source (16) is located at a first height and wherein the burner inlet (300) is located at a second greater height.

10. Apparatus according to any preceding claim, including at least one vent for venting conveying gas (70).

11. Apparatus according to claim 10, wherein a vent is provided at the flow modifying device (20).

12. Apparatus according to claim 11, wherein a vent is provided at the outlet (30) of the flow modifying device (20).

13. Apparatus according to any of claims 10 to 12, wherein a vent is provided at or near the burner inlet (300).

14. Apparatus according to any preceding claim, wherein the flow modifying device (20) comprises a cyclone separator (400).

15. Apparatus according to claim 14, wherein straightening vanes (125) are located downstream of the cyclone separator (400).

## Patentansprüche

1. Fördervorrichtung (100), die dazu ausgebildet ist, ein teilchenförmiges Material (8) von einer Quelle (16) zu einem Brenner (300), der an einem Flammofen (200) bereitgestellt ist, zu befördern, wobei die Vorrichtung umfasst:
pneumatische Fördermittel, die dazu ausgebildet sind, das teilchenförmige Material mit einer relativ hohen Geschwindigkeit zu befördern; und
eine Strömungsmodifizierungsvorrichtung (20), die an oder nahe dem Brennereingang (300) bereitgestellt ist, wobei die Strömungsmodifizierungsvorrichtung (20) dazu ausgebildet ist, den Strom des beförderten teilchenförmigen Materials (8) entgegenzunehmen und zu hemmen, derart, dass das teilchenförmige Material (8) mit verringerter Geschwindigkeit zu dem Brennereingang (300) strömt, und wobei die Strömungsmodifizierungsvorrichtung (20) eine erste Ausnehmung (24) an dem Brennereingang umfasst, die der Strömungsrichtung des teilchenförmigen Materials entgegengesetzt ist, derart, dass sich teilchenförmiges Material (8) innerhalb der ersten Ausnehmung (24) ansammelt, um dem nachfolgenden Strom von teilchenförmigem Material (8) entgegenzuwirken.

2. Vorrichtung nach Anspruch 1, wobei die Strömungsmodifizierungsvorrichtung (20) einen Eingang (18) und einen Ausgang (30) aufweist und wobei das teilchenförmige Material (8) in eine erste Richtung (a) zu dem Eingang (18) der Strömungsmodifizierungsvorrichtung (20) befördert wird und wobei das teilchenförmige Material (8) in eine andere, zweite Richtung (b) von dem Ausgang (30) zu dem Brennereingang (300) strömt.

3. Vorrichtung nach Anspruch 1 oder 2, wobei das teilchenförmige Material (8) über eine Leitung (12) von der Quelle (16) zu dem Brenner (300) befördert wird und wobei der Eingang (18) eine Querschnittsfläche größer als jene der Leitung (12) aufweist.

4. Vorrichtung nach einem beliebigen der vorhergehenden Ansprüche, wobei der Ausgang (30) eine Querschnittsfläche größer als jene des Eingangs (18) aufweist.

5. Vorrichtung nach einem beliebigen der Ansprüche 2 bis 4, falls von Anspruch 2 abhängig, wobei die zweite Richtung (b) in einem im Wesentlichen rechten Winkel zu der ersten Richtung (a) verläuft.

6. Vorrichtung nach einem beliebigen der Ansprüche 2 bis 5, falls von Anspruch 2 abhängig, wobei der Ausgang (30) derart geneigt ist, dass teilchenförmiges Material (8), welches von dem Ausgang (30) zu dem Brennereingang (300) strömt, durch die Schwerkraft unterstützt wird.

7. Vorrichtung nach einem beliebigen der Ansprüche 5 oder 6, umfassend eine zweite Ausnehmung (50), die der ersten Ausnehmung (24) nachgelagert und dem Brennereingang (300) vorgelagert bereitgestellt ist.

8. Vorrichtung nach Anspruch 7, wobei die zweite Ausnehmung (50) der Strömungsrichtung des teilchenförmigen Materials (8) von der ersten Ausnehmung (24) entgegengesetzt ist.

9. Vorrichtung nach einem beliebigen der vorhergehenden Ansprüche, wobei die Quelle (16) auf einer ersten Höhe angeordnet ist und wobei der Brennereingang (300) auf einer zweiten größeren Höhe angeordnet ist.

10. Vorrichtung nach einem beliebigen der vorhergehenden Ansprüche, umfassend mindestens eine Abzugsöffnung zum Auslassen von Fördergas (70).

11. Vorrichtung nach Anspruch 10, wobei eine Abzugsöffnung an der Strömungsmodifizierungsvorrichtung (20) bereitgestellt ist.

12. Vorrichtung nach Anspruch 11, wobei eine Abzugsöffnung an dem Ausgang (30) der Strömungsmodifizierungsvorrichtung (20) bereitgestellt ist.

13. Vorrichtung nach einem beliebigen der Ansprüche 10 bis 12, wobei eine Abzugsöffnung an oder nahe dem Brennereingang (300) bereitgestellt ist.

14. Vorrichtung nach einem beliebigen der vorhergehenden Ansprüche, wobei die Strömungsmodifizierungsvorrichtung (20) einen Zyklonabscheider (400) umfasst.

15. Vorrichtung nach Anspruch 14, wobei dem Zyklonabscheider (400) nachgelagert Leitschaufeln (125) angeordnet sind.

## Revendications

1. Appareil de transport (100) adapté pour transporter une matière particulaire (8) depuis une source (16) vers un brûleur (300) prévu sur un four à oxygène (200), l'appareil comprenant :
un moyen de transport pneumatique adapté pour transporter la matière particulaire à une vitesse relativement élevée; et
un dispositif de modification d'écoulement (20) prévu sur ou près de l'entrée du brûleur (300), sachant que le dispositif de modification d'écoulement (20) est adapté pour recevoir et retarder l'écoulement de la matière particulaire (8) transportée de telle façon que la matière particulaire (8) s'écoule en direction de l'entrée du brûleur (300) à une vitesse réduite et sachant que le dispositif de modification d'écoulement (20) comprend un premier évidement (24) opposé à la direction d'écoulement de la matière particulaire à l'entrée du brûleur de telle façon que la matière particulaire (8) est rassemblée à l'intérieur du premier évidement (24) pour s'opposer à l'écoulement consécutif de la matière particulaire (8).

2. Appareil selon la revendication 1, dans lequel le dispositif de modification d'écoulement (20) présente une entrée (18) et une sortie (30) et dans lequel la matière particulaire (8) est transportée dans une première direction (a) vers l'entrée (18) du dispositif de modification d'écoulement (20) et dans lequel la matière particulaire (8) s'écoule depuis la sortie (30) vers l'entrée du brûleur (300) dans une seconde direction (b) différente.

3. Appareil selon la revendication 1 ou 2, dans lequel la matière particulaire (8) est transportée depuis la source (16) vers le brûleur (300) via un conduit (12), et dans lequel l'entrée (18) présente une aire transversale supérieure à celle du conduit (12).

4. Appareil selon l'une quelconque des revendications précédentes, dans lequel la sortie (30) présente une aire transversale supérieure à celle de l'entrée (18).

5. Appareil selon l'une quelconque des revendications 2 à 4 si dépendant de la revendication 2, dans lequel la seconde direction (b) est essentiellement perpendiculaire à la première direction (a).

6. Appareil selon l'une quelconque des revendications 2 à 5 si dépendant de la revendication 2, dans lequel la sortie (30) est inclinée de telle façon que la matière particulaire (8) s'écoulant de la sortie (30) vers l'entrée du brûleur (300) est assistée par gravité.

7. Appareil selon l'une quelconque des revendications 5 ou 6, comprenant un second évidement (50) prévu en aval du premier évidement (24) et en amont de l'entrée du brûleur (300).

8. Appareil selon la revendication 7, dans lequel le second évidement (50) est opposé à la direction d'écoulement de la matière particulaire (8) venant du premier évidement (24).

9. Appareil selon l'une quelconque des revendications précédentes, dans lequel la source (16) est située à une première hauteur et dans lequel l'entrée du brûleur (300) est située à une seconde hauteur plus grande.

10. Appareil selon l'une quelconque des revendications précédentes, comprenant au moins un évent pour ventiler le gaz de transport (70).

11. Appareil selon la revendication 10, dans lequel un évent est prévu sur le dispositif de modification d'écoulement (20).

12. Appareil selon la revendication 11, dans lequel un évent est prévu à la sortie (30) du dispositif de modification d'écoulement (20).

13. Appareil selon l'une quelconque des revendications 10 à 12, dans lequel un évent est prévu sur ou près de l'entrée du brûleur (300).

14. Appareil selon l'une quelconque des revendications précédentes, dans lequel le dispositif de modification d'écoulement (20) comprend un séparateur cyclone (400).

15. Appareil selon la revendication 14, dans lequel des ailettes de redressement (125) sont situées en aval du séparateur cyclone (400) .
